# EUROPEAN PATENT SPECIFICATION

(11) **EP 2 178 641 B1**
(45) Date of publication and mention of the grant of the patent: **11.04.2018**
(21) Application number: 08797543.9
(22) Date of filing: 08.08.2008
(51) Int. Cl.: B01L 3/00

(54) **METHODS AND DEVICES FOR CORRELATED, MULTI-PARAMETER SINGLE CELL MEASUREMENTS AND RECOVERY OF REMNANT BIOLOGICAL MATERIAL**
VERFAHREN UND VORRICHTUNGEN FÜR KORRELIERTE MULTIPARAMETER-EINZELZELLMESSUNGEN UND WIEDERGEWINNUNG VON RESTLICHEM BIOLOGISCHEM MATERIAL
PROCÉDÉS ET DISPOSITIFS PERMETTANT DES MESURES CORRÉLÉES ET MULTIPARAMÈTRES PORTANT SUR UNE SEULE CELLULE, AINSI QUE LE RECUEIL DE RÉSIDUS DE MATÉRIAUX BIOLOGIQUES

(30) Priority: 09.08.2007 US 954946 P
(43) Date of publication of application: 28.04.2010
(73) Proprietor: Progenity, Inc., San Diego CA 92122 (US)
(72) Inventor: KATZ, Andrew, S., La Jolla, California 92037 (US); ZHANG, Haichuan, San Diego, California 92126 (US); AHN, Keunho, La Jolla, California 92037 (US); ZHANG, Yi, San Diego, California 92122 (US)
(74) Representative: Boult Wade Tennant
(86) International application number: PCT/US2008/072699
(87) International publication number: WO 2009/021215

(56) References cited:
- WO-A2-03/085379
- US-A- 5 591 609
- US-A- 5 858 195
- US-A1- 2002 114 739
- US-A1- 2005 074 506
- US-A1- 2006 134 687
- US-A1- 2006 222 569
- US-B1- 6 251 343
- US-B1- 6 297 053
- US-B1- 6 540 895
- US-B2- 6 664 104
- US-B2- 6 778 724
- US-B2- 7 041 481
- BARET JEAN-CHRISTOPHE ET AL: "Fluorescence-activated droplet sorting (FADS): efficient microfluidic cell sorting based on enzymatic activity", LAB ON A CHIP, ROYAL SOCIETY OF CHEMISTRY, CAMBRIDGE, GB , vol. 9, no. 13 7 July 2009 (2009-07-07), pages 1850-1858, XP009122819, ISSN: 1473-0197, DOI: 10.1039/B902504A Retrieved from the Internet: URL:http://www.rsc.org/Publishing/Journals /lc/Index.asp
- MATTANOVICH DIETHARD ET AL: "Applications of cell sorting in biotechnology", MICROBIAL CELL FACTORIES, BIOMED CENTRAL, LONDON, NL, vol. 5, no. 1, 21 March 2006 (2006-03-21), page 12, XP021017772, ISSN: 1475-2859, DOI: 10.1186/1475-2859-5-12
- GRIFFITHS A.D. ET AL.: 'Miniaturising the laboratory in emulsion droplets' TRENDS IN BIOTECHNOLOGY vol. 24, no. 9, September 2006, pages 395 - 402, XP025052247

## Description

### Field of the Invention

This invention relates to methods and apparatus for performing automatic, correlated cell-by-cell quantitative measurement of proteins and nucleic acids from a high throughput sample with the option to sort and collect genomic material.

### Related Applications

This an international filing that claims the benefit of provisional application no, 60/954,946 filed August 9, 2007, entitled "Method for Correlated, Multi-Parameter Single Cell Measurements and Recovery of Remnant Biological Material,".

### Background of the Invention

Fluorescent Activated Cell Sorting (FACS) is widely used in research and clinical applications. These instruments are capable of very fast, multi-parameter analysis and sorting but generally require large sample volumes, a trained operator for operation and maintenance, and are difficult to sterilize. FACS instruments are able to analyze as few as 10,000 and as many as tens of millions of cells. In sorting applications, however, the ability to perform sorting diminishes for sample sizes smaller than 100,000 cells. In all cases, the cells must be labeled in advance. Most often, an antigen or similar membrane bound protein is labeled using antibodies conjugated to fluorescent molecules (e.g., fluorescein isothiocynate a.k.a. FITC), but nuclear stains, intracellular dyes or cell directed synthesis of fluorescent proteins (e.g., green fluorescent protein a.k.a. GFP) may also be detected by flow cytometry. Molecular assays may also be adapted for flow cytometry. For instance, fluorescent beads with multiple colors and/or intensities may be used as solid supports for antibody capture assays of protein or peptide analytes. Similarly, nucleic acids may be hybridized to beads and fluorescent labels for rapid readout using a flow cytometry. In both cases, the biochemistry is performed in advance of the flow cytometry measurement and the instrument is used as a rapid bead reader. In some cases, scanning cytometry approaches may be equally effective for a readout. FACS instruments support multiplexing of information up to the number of independent fluorescent channels supported by the instrument, but the information multiplexed is of a single type (i.e., phenotype-only).

Real-time polymerase chain reactions (a.k.a qPCR) are a technique used to quantitatively measure DNA and RNA extracted from cells of interest. Most qPCR reactions are done in bulk using the pooled genomic equivalent of 10,000 to 100,000 cells. Increasingly, researchers are interested in measuring the genetic contents of individual cells, but this effort is impeded by the high cost of reagents and the labor intensive manual approaches available today. As a result, most single cell PCR studies have been conducted on fewer than 100 cells. Even state of the art robotics and 1536 micro-well plates use volumes in the range of 1 - 10 µL per well still become costly beyond a few hundred wells. In cases where rare events that may occur in less than 1% of the cell population of interest, it may be desirable to examine up to 50,000 cells one-by-one. Current technologies cannot achieve this level of throughput without significant costs in time and money.

In studies of signal transduction or the pursuit of systems biology, it is often desirable to correlate disparate information. Data that links cell surface receptors or reporters and intracellular signaling is increasingly valuable to these activities. To date, this information has been correlated based on bulk populations of cells. Typically, thousands to millions of cells are assayed for either surface proteins or for RNA expression and the information is statistically linked. Any heterogeneity in the sample is averaged out during the measurement. Powerful techniques such as siRNA gene silencing, which inherently introduce heterogeneity into the sample, are limited by this averaging of information.

The value of quantitatively correlating proteins (or other signatures of the phenotype) and nucleic acids of the genotype on a cell-by-cell basis has been recognized by many researchers. Microfluidics has been identified as one technology that would enable instruments capable of such measurements, but examples of methods and apparatuses have not been produced.

Microfabricated cytometers have the potential to analyze and sort as few as 1,000 cells while concomitantly consuming smaller amounts of reagents in an easy to use, closed system. The former is important when working with high-cost reagents such replication enzymes. The latter is important because, unlike conventional FACS instruments, aerosols are not created, reducing the risks of contamination of the sorted cells and of working with biohazardous materials. Several microfabricated cell analyzers and sorters have been described, but mostly as "proof of concept".

By combining elements of microfabricated cytometers, techniques for single cell encapsulation and appropriate signal processing, an instrument capable of cell-by-cell correlation of protein expression and gene expression may be achieved.

### Summary of the Invention

A method of correlating phenotypic and genotypic information on a cell by cell basis as defined in claim 1 is provided. Cells are labeled for phenotypic measurement in advance. In one embodiment, a continuous flow microfluidic network integrates all functionality. In the first part of the microfluidic network, cells are measured for the fluorescent signal produced by the phenotypic label. The second part of the microfluidic network individually encapsulates cells in microreactors along with a pre-determined mix of reagents suitable for measurement of gene expression. In the next part of the microfluidic network, the stream of encapsulated cells is encoded with a reference signal that may be included in the microreactor contents or separate from it. In the fourth part of the microfluidic network, the cells are lysed and gene expression is measured by a suitable technique (e.g., real-time polymerase chain reaction a.k.a. real-time PCR or qPCR). The stream of microreactors is then decoded in the next stage and a signal processing algorithm correlates the phenotype and genotype measurements. As a final optional step, the microreactors may be sorted to enrich for specific genomes. In a related embodiment, cells are encapsulated first, so that phenotyping and encoding may take place simultaneously. This is followed by lysing of cells and then measurement of gene expression and decoding simultaneously. This reduces the number of points of interrogation on the microfluidic network.

In a second embodiment, a microfluidic network is combined with arrays of micro-wells to isolate individual cells and correlate genetic information with phenotype clusters pre-selected by the user. In the first part, a microfluidic network is used to measure cells for a fluorescent signal produced by the phenotypic label. In the second part, a multi-path switching network is used to sort cells into individual nanofluidic micro-wells. The wells may be arranged such that each cell is located in a uniquely identified coordinate or the wells may be arranged to cluster cells in two or more arrays. In the latter case, the user selects the desired destination of the cell by selecting one or more gates based on the phenotypic information obtained. The wells are sealed to individually encapsulate the cells with a pre-determined mix of reagents suitable for gene expression measurements. The cells are lysed and gene expression is measured by a suitable technique by readout from the array. The information from the reaction in the micro-wells may be analyzed to examine statistical distributions of the genetic signal and the information may be discretely correlated back to the selected phenotype. As a final optional step, the contents of the individual micro-wells may be collected for further genetic analysis.

In a third embodiment, a scanning cytometry approach using an array of nanofluidic micro-wells is used to isolate individual cells and capture correlated phenotype and genotype information. Again, cells are labeled for phenotypic measurement in advance. The cells are deposited in the micro-wells and the wells are sealed to individually encapsulate the cells with a pre-determined mix of reagents suitable for gene expression measurements. A scanning cytometry analysis of the cells collects phenotype information indexed to the coordinate of the well, the cells are lysed and then gene expression is measured by a suitable technique for readout from the array. The signals are concatenated into a single correlated data set. As a final optional step, the contents of the individual micro-wells may be collected for further genetic analysis.

In all embodiments, one or more phenotypic measurements may be made. Typically, up to four or five independent fluorescent signals are detectable simulateneously. The measurements of gene expression may be measurements of a single gene, or preferably a multiplex of two or more genes within each reaction in order to obtain normalized, quantitative information about the expression levels of selected genes.

### Brief Description of the Drawings

Fig. 1 is a conceptual drawing of the invention showing how phenotypic (e.g., cell surface proteins labeled with fluorescently conjugated antibodies) and genotypic (e.g., single-cell, multiplexed quantitative PCR) information may be sequentially obtained and correlated for analysis.
Fig. 2 is a functional block diagram of the elements of the invention in a continuous flow format.
Fig. 3 is a functional block diagram of the elements of the invention in a modified continuous flow format or a scanning cytometry format
Fig. 4 is a schematic of the microfluidic elements used in a continuous flow embodiment of Fig. 2
Fig. 5 is a schematic of an example of how correlation of phenotype and genotype measurements may be obtained through encoding and decoding of periodic or aperiodic events in the continuous flow embodiment of Fig. 2.
Fig. 6 is a functional block diagram of embodiment of an integrated system for performing phenotype and genotype correlation including a self-contained, disposable cartridge and an instrument.
Fig. 7 illustrates an embodiment of a sample loading cartridge for use with the microfluidic network illustrated in Fig. 6.
Fig. 8 illustrates an embodiment of a sample loading cartridge, microfluidic loading chip and capillary tube for performing cell by cell phenotype and genotype analysis and correlation.
Fig. 9A illustrates an embodiment of a thermal control module for use with the capillary tube of Fig. 8.
Fig. 9B illustrates an embodiment of the capillary tube holders in the thermal control module of Fig. 9A.
Fig. 9C illustrates an alternative embodiment of the capillary tube holders in the thermal control module of Fig. 9A.
Fig. 10 illustrates an embodiment of a microfluidic chip for use with the sample loading cartridge illustrated in Fig. 7 for performing cell by cell phenotype and genotype analysis and correlation.
Fig. 11 is an alterative embodiment of a microfluidic chip for use with the sample loading cartridge illustrated in Fig. 7 for performing cell by cell phenotype and genotype analysis and correlation.
Fig. 12 is a functional block diagram of a discrete correlation embodiment of single cell phenotype and genotype analysis and correlation.
Fig. 13A is a schematic of the microfluidic elements and nanowell array for performing the discrete correlation embodiment of Fig. 12.
Fig. 13B is a schematic illustrating the steps for sorting and indexing the single cells in the embodiment illustrated in Fig. 13A
Fig. 14A illustrates an alternative embodiment of a method for discrete correlation with nanowells in a multi-branch microfluidic circuit.
Fig. 14B illustrates the phenotype-genotype correlation for samples sorted into nine phenotype clusters using the embodiment illustrated in Fig. 14A
Fig. 15A is a schematic of elements alternative embodiment for single cell phenotype and genotype analysis and correlation using scanning cytometry in a nanowell.
Fig. 15B illustrates the steps for scanning and indexing the individual cells in the embodiment illustrated in Fig. 15A

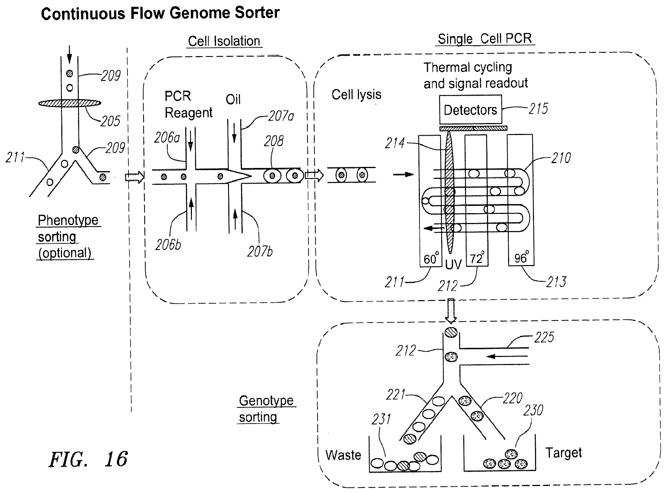

Fig. 16 is a schematic of the microfluidic elements used in a continuous flow embodiment of a single-cell genome analyzer and sorter.

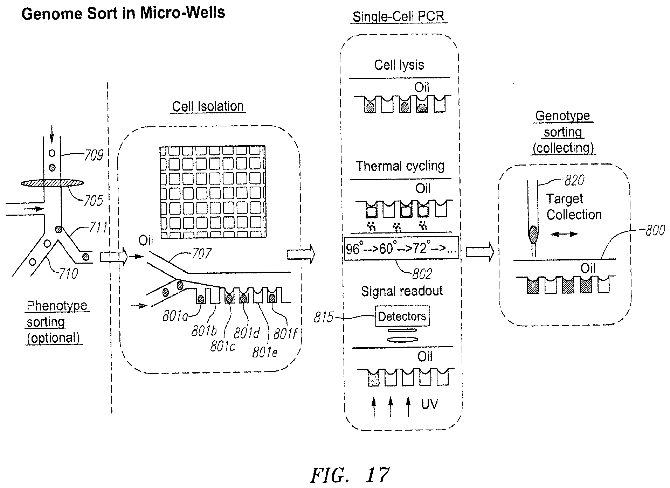

Fig. 17 is a schematic of the microfluidic elements and nanowell array used in a discrete embodiment including genotypic sorting.
Figs. 18A-D show actual microphotographs of actual devices showing flow format.
Fig. 19 is an oscilloscope trace showing amplitude as a function of time for cell forward scattering and drop forward scattering.
Fig. 20 is a microphotograph of six parallel capillaries containing encoded drops having varying length.
Fig. 21 is a microphotograph of three capillaries having encoded drops of variable length and sequence.
Figs. 22A and B show test results in microvessels before and after PCR, respectively.
Figs. 23A and B show microvessels in a three phase system before and after PCR amplification.

### Detailed Description of the Invention

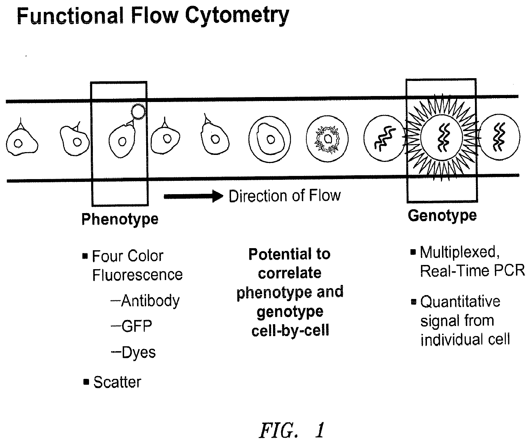

The present invention provides methods for performing cell by cell analysis of phenotypic (e.g., cell surface proteins or intracellular proteins labeled with fluorescently conjugated antibodies or constitutively expressed fluorescent reporter molecules such as green fluorescent protein) and genotypic (e.g., single-cell, multiplexed quantitative PCR or RT-PCR for detection of single nucleotide polymorphisms (SNPs), DNA copy number, or RNA gene expression) information on a scalable basis for samples numbering from the hundreds of cells to thousands of cells to the tens to hundreds of thousands cells. The larger sample sizes advantageously allow multi-dimensional scatter plots to reveal biological patterns and relationships between genes and proteins. As shown in Fig. 1, the primary objective of the invention is to sequentially interrogate single cells for selected phenotypic characteristics and for selected gene expression and then correlate this information on a cell-by-cell basis. Methods for correlating phenotype-genotype information for high throughput samples can be performed on a continuous flow sample within a microfluidic network, or alternatively on a static sample pre-loaded in a nanowell array chip. For example phenotype measurements can be performed using flow cytometry in continuous flow embodiments or scanning cytometry for static samples pre-loaded into a nanowell chip to detect a fluorescent signal indicative of a physical characteristic of the cells in the sample such as cell morphology, cell size, or localization of fluorecent labels (in the nucleus vs. cell surface or cytoplasm). In some embodiments, multiple phenotype measurements can be made using for example, two, three or four color fluorescence detection. Other methods of phenotype analysis include measuring the light scatter, i.e. forward and side scatter, of the cells. The cells are then encoded to create an index of the phenotype measurements for later correlation. In a nanowell chip, the location of the cell on the array provides the encoding signal. In a continuous flow embodiment, the cells are encapsulated in nanoliter microvessels and dyes, encoding beads, or any other optically detectable physical parameter can be associated with the microvessels on pseudorandom basis to create a index. The cells are then lysed and a target DNA sequence is amplified, for example by isothermal amplification or polymerase chain reaction (PCR), including end-point PCR, realtime PCR (RT-PCR) or quantitative PCR (qPCR), or any other method of nucleic acid amplification, to measure the gene expression, genotype or other nucleic acid characteristic of interest in the cells. The amplified product, i.e the amplified DNA sequence, in each microvessel is detected and measured, using an optical imaging sensor, and this data is sent to a processor for correlation with the previously measured phenotype information for each microvessel. The phenotype data for each microvessel is decoded using the index created by the reference signal or the nanowell array location and this information is correlated with the genotype information from the amplification of the target DNA or RNA, e.g., detection of single nucleotide polymorphisms (SNPs), DNA copy number, or RNA gene expression.

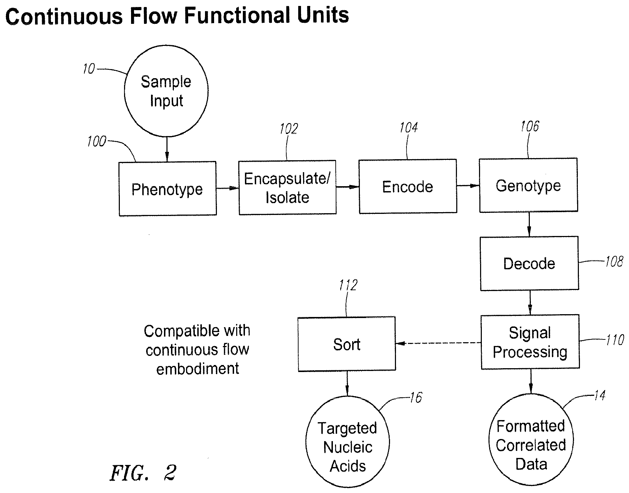

Fig.2 illustrates the steps for analyzing individual cells and correlating the phenotype and genotype data in a continuous flow embodiment. In step 100, the entire population of a sample input 10 containing a plurality of cells in an aqueous solution is analyzed for a selected phenotypic characteristic, such as protein expression, cell morphology, cell size, or localization of fluorecent labels (in the nucleus vs. cell surface or cytoplasm). The cells are first labeled, for example, with antibodies labeled with fluorescent molecules (fluorochromes), green florescent protein or a dye. The sample is then introduced into a microfluidic flow cell and the cells are focused into a single cell stream. The stream of cells is them sequentially measured for the fluorescent signal produced by the phenotypic label. In some embodiments, multiple phenotypic characteristics can be measured using four color flow cytometry. Next, in step 102, the cells are individually encapsulated in nanoliter microvessel or droplets with a pre-determined mix of reagents suitable for amplifying a target DNA sequence in the cell. For example, the cells and PCR reagent mix can be introduced into a flow channel in a microfluidic network designed to isolate and encapsulated individual cells in a stream of water in oil drop as further discussed below. The drops, or microvessels preferably have a cross sectional diameter larger than the sample cells and smaller than the cross sectional diameter of the flow channel. For example the microvessels are preferably between 30 to 500 microns depending on the flow channel size. A majority of the microvessels preferably contain either one cell or zero cells, according to a Poisson distribution based on cell concentration and drop volume. Alternately, a non-Poisson distribution of zero or one cell may be loaded using active control of encapsulation (e.g., using a constriction, valve or gate to meter cells in a controlled manner). For example, in some embodiments at least 90% of the microvessels contain one or zero cells, alternatively at least 80% of the microvessels contain one or zero cells, alternatively at least 70% of the microvessels contain one or zero cells, alternatively at least 60% of the microvessels contain one or zero cells. The number of cells in each microreactor is measured to normalize the resulting data. For example, in one method, the flow channel is illuminated and an optical detector measures a signal, such as forward scatter, that indicates the presence or absence of a cell in the drop. A more sophisticated detection uses an array of forward scatter detections to provide a better spatial resolution for counting and localizing the cells/particles inside the drops. In yet another approach, dark field illumination and imaging can be added to a single detector scatter measurement. When forward scatter signal detects the front edge of the drops, a CCD camera can be synchronized to take a dark field image of the drops. The cells/particles will be bright spots in the images, which can be processed and identified for counting.

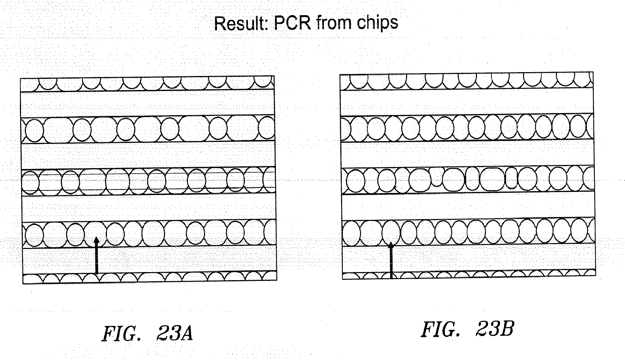

In some embodiments, the cells may be sorted based on a parameter selected by the user, such as the measured phenotypic characteristic. For example, the presence of a target cell with the desired characteristic can be detected in the fluid stream by fluorescence, forward scattering or any suitable imaging or detection modality. The target cell can then be directed to a target flow channel, using, dielectrophoresis, a pneumatic switch or a bi-directional fluid or optical switch described in co-pending Patent Application Serial No. 11/781,848, entitled "Cell Sorting Systems and Methods" (published WO2008130871), for encapsulation and/or encoding. Non-target cells can be directed to a waste flow channel attached to a waste reservoir. In some embodiments, the cells can be sorted prior to phenotype measurement. Alternatively, the cells can be sorted based on the measured phenotypic characteristic. In an alternative embodiment, two oils may be used to form a three-phase system where one oil acts as a carrier fluid and the second oil acts as a space between drops. This inhibits coalescence of adjacent aqueous drops. An example of microvessels in a three phase system before and after PCR amplification is shown in Figs. 23A and B.

In step 104, the microvessels are encoded with a reference signal to index the phenotype information of the cells in the microvessels for later correlation with the gene expression of the cells in the microvessel. The reference signal can be included in the microvessel or separate from the microvessel. The reference signal can be generated using a pseudorandom pattern of any physical parameter that has a unique signature and can be optically measured. One or more images of the encoded microvessels are then recorded and stored for later comparison and correlation with images of the microvessels following the genotypic measurement with the included in the microreactor or separate from the microreactor. For example, in some embodiments, fluorescent microbeads or dyes may be injected into the microvessels in a pseudorandom pattern which is then imaged. Alternatively, the size of the microvessels, length of the microvessels and/or spacing between microvessels can be varied to create a pseudorandom pattern capable of being reconstructed. The interval of the reference signals in the encoding pattern can be varied depending on the tracking accuracy required. For example, in some embodiments, a reference signal can be associated with every microvessel, alternatively a reference signal can be associated with every 10 microvessels, alternatively with every 100 microvessels, alternatively with every 200 microvessels, alternatively with every 500 microvessels, alternatively with every 1000 microvessels.

In step 106, the genotype of the cells is measured. The cells are lysed and subjected to thermal conditions necessary for amplification of the target DNA sequence, for example by isothermal amplification, endpoint PCR, reverse transcription PCR or quantitative PCR. In embodiments performing amplification via PCR, the temperature is cycled to produce suitable temperatures for the desired number of PCR cycles. This may be accomplished with a standard thermal cycler using a heat block or Peltier device, or it may be accomplished with alternative technologies such as an oven, hot and cold air, flowing a heated liquid with good thermal conductivity, transferring the device between instrument components held at different temperatures or any other suitable heating elements known in the art (this same list will be understood to be applicable to other embodiments described herein). In some embodiments, the microvessels can be continuously flowed through a serpentine flow channel that repeatedly passes through fixed temperature zones to achieve a polymerase chain reaction. Alternatively, the microvessels can be loaded into a flow channel and remain more or less static while the temperature of the flow channel is repeatedly cycled through the temperature profile needed to achieve a polymerase chain reaction. The microvessels are subjected to the desired number of PCR cycles for amplification of the target DNA and the amplified product is measured The reagent mix encapsulated with the cell in the microreactor includes non-specific fluorescent detecting molecules such as intercalating dyes or sequence specific fluorescent probes such as molecular beacons, TaqMan® probes or any other suitable probe or marker known in the art that will fluoresce at a level proportional to the quantity of the amplified product when excited. These probes may bind to double stranded DNA products, single stranded DNA products or non-product oligonucleotides created by the DNA amplification process that are present in an amount proportional to the DNA product. An imaging system uses light of a desired wavelength to excite the fluorescent probes to measure the amplified product directly or indirectly.

In step 108, the genotype measurement is decoded. An optical detector such as a photomultiplier tube, a CCD camera, photodiodes or photodiode arrays or other optical detector measures the intensity of the fluorescent signal from the probes or markers in each microvessel and determines the quantity of amplified product at least once during each PCR cycle. The image(s) from the optical detector are sent to a computer for image processing and comparison to the recorded encoding pattern of the microvessels. In step 110, image processing algorithms known in the art can be used to compare the index images with the images from the genotype measurements and the genotype measurements can then be correlated to the phenotype measurements on a cell-by-cell basis.

In some embodiments, in step 112, the microvessels can be sorted based on the measured gene expression to capture target nucleic acids for further analysis. An optical switch, as discussed above, can be used to direct the microvessels into a target flow channel or a waste flow channel based upon the genotype measurement.

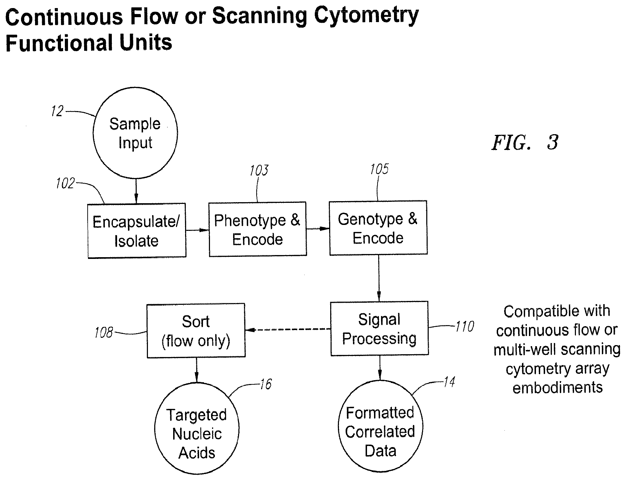

In an alternative embodiment, as shown in Fig. 3, several of the steps can be performed simultaneously to minimize the number of points of interrogation on the microfluidic network. Here, cells in the sample input 12 already labeled for phenotype analysis are introduced into the instrument and in step 102 individually encapsulated in microvessels or droplets with a pre-determined mix of reagents suitable for amplifying the target DNA in the cells. The reference signal for encoding can be simultaneously encapsulated in transparent microvessel or alternatively the flow conditions can be controlled to pseudorandomly alter a physical characteristic of the microvessels to create the reference signal. In step 103, the phenotype and reference signal may be measured and recorded in a single step to encode the phenotype information and create an index for correlation with the genotype measurement. Next in step 105, the genotype and decoding signal may also be measured in a single step. For example, in the above first embodiment, the genotyping light source and detectors are different from the light source and detectors for decoding. Here, the light source and/or the detector may be shared.

The individual cells are lysed and then the microvessels are subjected to the thermal conditions necessary for amplification of the target DNA sequence, for example by real-time or quantitative PCR. The microvessels are subjected to the desired number of PCR cycles for amplification of the target DNA. The amplified product is measured in between the PCR cycles by exciting the flouoprobes included in the PCR reagent mix and detecting the intensity of the fluorescence with an optical detector. The optical detector can be a scanning detector, for use with a continuous flow system, or alternatively a stationary detector The images are sent to a computer for image processing and comparison to the recorded encoding pattern of the microvessels. The genotype measurements can then be correlated to the phenotype measurements on a cell-by-cell basis.

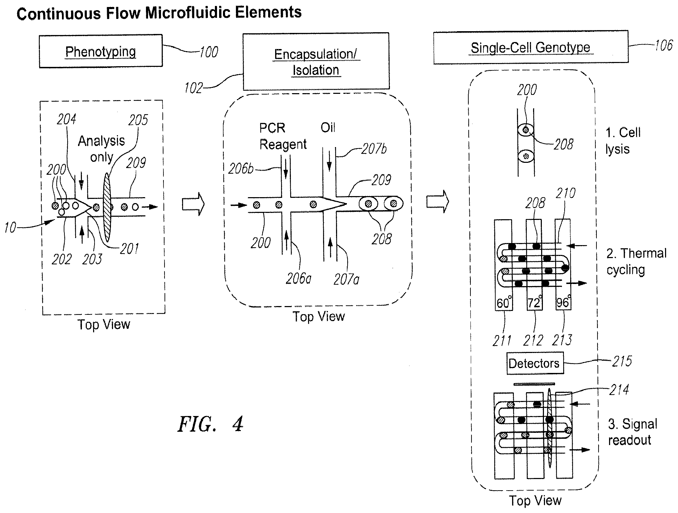

Figs. 4-5 illustrates the above described steps in further detail and the microfluidic components used to perform the steps. In step 100, phenotype analysis is performed by introducing cells 200 into a flow channel 209 via microfluidic inlet 202. The cells 200 are pinched by a sheath buffer flow 201 created by two lateral sheath buffer channels 203, 204. The buffers that are used for the sheath flow can be any buffers that are biologically compatible with the cells that are being analyzed and are compatible with optical illumination that is used both for the fluorescence detection (i.e., the buffer has sufficiently low absorbance at the fluorescence excitation/detection wavelengths) and the optical switch wavelength. A preferred embodiment of the sheath buffer uses PBS/BSA, phosphate buffered saline (PBS) at pH 7.2 with 1% bovine serum albumin (BSA) fraction 5.

The sheath buffer 201 focuses the cells 200 into single file line of cells 200 which are then interrogated at an analysis region 205 to measure one or more desired phenotypic characteristics of the cells. A source of illumination, such as fixed or scanning lasers, UV lamps, light emitting diodes or an other collimated light source, causes the labels, such as fluorescing dyes, antibodies, GFP or other flourochromes, attached to the cells 200 to fluoresce and scatters off cells and vessels to provide information on the physical properties of each cell and vessel (e.g., size, morphology, or boundaries). One or more optical detectors, such as CCD imaging, PMTs, or photodiode arrays, measure the resulting signal(s). Other types of optical measurements, such as light scattering, may also be performed at this analysis region 205 to measure phenotypic characteristics of the cells 200. In some embodiments, multiple phenotype measurements can be performed using for example four color flow cytometry or by measuring fluorescence and/or scattering. For example, by labeling cells with multiple fluorophore and using additional fluorescence detection channels that are sensitive to fluorescence emissions at different wavelength, typically using a single excitation wavelength, such as, but not limited to, 488 nm, multiple phenotypic measurements can be made. Here, each detection channel would incorporate a PMT with an appropriate dichroic mirror and emission filter for the fluorescence emission wavelength of the additional fluorophore. From two to four fluorescence detection channels are readily accommodated in this manner.

In the embodiment shown, the PCR mix including reagents necessary for measurement of gene expression and fluorescent DNA detecting molecules or probes is injected into the flow stream via lateral reagent flow channels 206a,b placed between the sheath flow channels 203, 204 and the encapsulation flow channels 207a,b. In an alternative embodiment, the PCR mix can be introduced into the cell stream by the sheath buffer flow channels 203, 204.

In the next step 102, encapsulation is performed by introducing a hydrophobic encapsulation media into the flow channel 209 via lateral encapsulation flow channels 207a,b. Silicon oil, mineral oil, fluorocarbon oils or other hydrophobic liquids may be used to facilitate creation of discrete aqueous drops. The encapsulation media pinches the stream of PCR mix and cells into individual water-based nano-liter microvessels, or microreactors, 208. The nano-liter microvessels 208 preferably have diameters larger than the cells 200 but not significantly larger than the microfluidic channel 209. Flow conditions in the encapsulation flow channels 207a,b are selected to ensure that zero or one cell per microvessel are preferably encapsulated. For example, microfluidic channels compatible with flow cytometry typically have cross sections of 50 - 100 µm by 150 - 300 µm and Teflon capillary tubing is available with diameters as small as 400 µm, so the microvessel 208 diameters would be in the range of 30 - 400 µm.

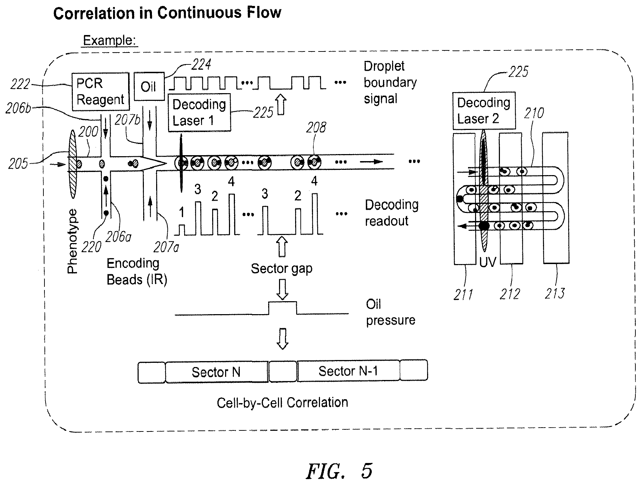

In the next step 104, encoding and decoding the sequence of microreactors 208 is performed in order to facilitate correlation of phenotype data with genotype data. As shown in Fig. 5, encoding is performed between the phenotype analysis and oil encapsulation by attaching one or more encoding bead 220 to some of the cells 200 in the cell stream in a pseudorandom sequence. In the illustrated embodiment, the encoding beads 220 have a fluorescent signal that can be read and recorded to create an index of location of the individual microvessels 208 within the stream of microvessels 208. Alternatively, an optically detectable pulse of dye can be associated with individual cells in a pseudorandom pattern. Once the encoding beads 220 have been attached to the cells 200, the cells 200 are encapsulated in the individual microvessels 208 and then the microvessels 208 are flowed passed a decoding laser 225 which causes the encoding beads 220 to fluoresce, and one or more detectors 225 measure the resulting signal to encode the microvessels 208 and create an index of the microvessels 208. The recorded pattern of encoding beads (or dye) and cells becomes a unique signature that may be used after the cells are lysed to correlate the signal from each reactor back to the measured cell phenotype. After amplification has been performed, a second decoding laser 226 is located adjacent the serpentine flow channel 210 to image the microvessels. The second decoding laser 226 uses a light source, such as a fixed or scanning laser, a UV lamp, or light emitting diodes, to cause the encoding beads 206 to fluoresce or scatter and an optical detector, such as CCD imaging, Photomultiplier tubes, photodiodes, or photodiode arrays, measures the signal to create an image of the microvessels 208 which can be compared to the stored encoding image to identify the individual microvessels 208. Error correction algorithms routinely used to identify dropped data bits in magnetic data storage may be employed to determine the sequence of events

In the illustrated embodiment, a second, redundant encoding signal is provided by varying the flow conditions in the flow channel 209 to vary the spacing between the microvessels 208. As shown in Fig. 5, this creates another optically detectable reference signal, i.e the droplet boundary signal. that can be imaged, stored and reconstructed to track the individual microvessels 208. In alternative embodiments, either method for creating a unique, reconstructable pattern of reference signals could be used separately to encode the microvessels. Moreover, with both embodiments, the encoding signal can be made more or less robust depending on the acceptable error level in cell tracking by increasing or decreasing the frequency with which the encoding information is attached to the individual microvessels. For example in some embodiments the encoding beads can be attached to every microvessel. Alternatively a random pattern of encoding beads can applied to several microvessels every 10 vessels, alternatively every 50 vessels, alternatively every 100 vessels, alternatively every 500 vessels, alternatively every 1,000 vessels. Similarly if the encoding signal is created by varying the distance between microvessels, the distance can be adjusted to encode in blocks of 10 vessels, alternatively in blocks of 50 vessels, alternatively in blocks of 100 vessels, alternatively in blocks of 500 vessels, alternatively in blocks of 1000 vessels.

Next, in step 106, the encapsulated cells 200 are lysed and analyzed for gene expression by realtime or quantitative PCR. Several means known in the art can be employed to lyse the cells including photolysing with a laser, ultrasound-based lysing, or chemical lysing. The microvessels 208 then flow through a serpentine microfluidic channel 210 that passes the microvessels 208 through one or more thermal zones necessary for amplification and real-time detection of amplified gene products. In the illustrated embodiment, the serpentine channel 210 repeatedly flows through three temperature zones 211, 212 and 213. The temperature zones are maintained at suitable temperatures for conducting PCR cycles. For example as shown here, a first temperature zone 211 is approximately 60°, a second temperature zone 212 is approximately 72°, and a third temperature zone 213 is approximately 96°. A temperature control system adjusts the flow conditions to ensure that the microvessels are held at each temperature zone for the appropriate time for a PCR cycle. The microvessels 208 are passed through the temperature zones 211, 212, 213 multiple times and measured after each passage to determine the quantity of amplified product. As discussed above, the PCR mix includes probes that fluoresce at a level proportional to the quantity of amplified product. The fluorophores may be excited by a light source 214, such as fixed and scanning lasers, UV lamps, light emitting diodes, at a specific time or temperature during each PCR cycle and detected by a detector 215 such as photomultiplier tube, CCD camera, photodiodes or photodiode arrays, or other optical detector. The detector 215 measures the intensity of the fluorescence to determine the quantity of amplified product in the microreactors 208.

Next, in step 108, the previously recorded phenotype measurements are decoded. As shown in Fig. 5, a second decoding laser 225 reads the encoding signal from the individual microvessels 208 as they undergo amplification in the serpentine channel 210. The encoding signal and the gene expression measurements are then sent to a processor for decoding of the encoding signal and correlation of the phenotype information for the cell associated with the encoding signal and the recently measured gene expression.

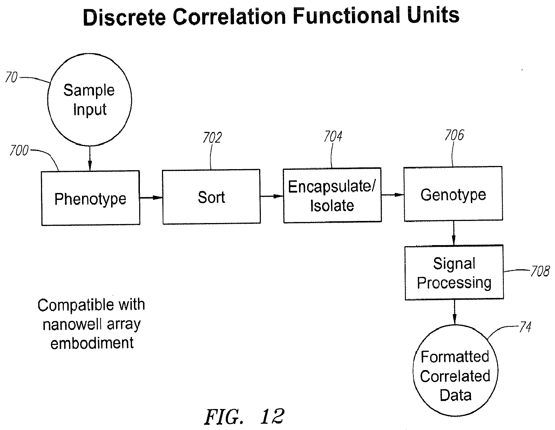

In some embodiments, it may be desired to recover genetic material from a selected portion of the cells measured, or alternatively to sort of cells based on a genetic signature without correlating to a phenotype. For example, as shown in Fig. 12, in some embodiments, at the end of the gene expression measurement, the microvessels 208 may be sorted into two or reservoirs, such as waster reservoir 231 and target reservoir 230. The microvessels are sorted using a lateral force switch 225 to switch the microvessels 208 between laminar flow streams flowing into a target flow channel 220 and a waste flow channel 21 based on the correlated phenotype-genotype measurement. The lateral force switch may be generated using optical forces, dielectrophoresis, fluidic pulses or similar means. In some embodiments, the phenotype measurement is not performed and the sorting after PCR amplification is based on the genotypic measurement alone.

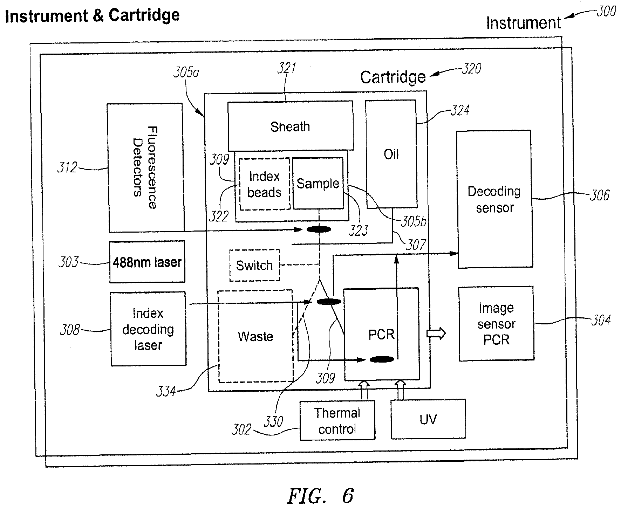

Fig. 6 illustrates an embodiment of an integrated system for performing cell by cell phenotype and genotype correlation in a microfluidic network. Instrument 300 comprises a reusable platform for housing the thermal module 302 , excitation sources 303, 308, and detectors 312, 304 and 306 needed to interrogate and analyze the sample contained in the cartridge 320. Disposable sample loading cartridge 320 including a microfluidic network chip interface with the instrument 300 to perform the analysis of the sample. The cartridge 320 has multiple reservoirs 321-324 configured to contain the cell sample and all reagents, buffers, encoding dyes or beads, and encapsulation media required to encode, isolate and amplify the sample cells. In the illustrated embodiment, the cell sample is contained in reservoir 323, the oil encapsulation media is contained in reservoir 324, the encoding beads are contained in reservoir 322 and the sheath buffer for creating a single cell flow stream is contained in reservoir 321. Here, the PCR mix including the reagents needed for amplification and fluorescent markers is contained in the sheath reservoir 321 as well.

The chip is bonded with UV adhesive to the optical window region of the cartridge 320, and inlet ports from the chip interface with their respective reservoir volumes on the disposable cartridge 320. An inlet port in sample flow channel 309 on the chip is fluidically connected to the cell sample reservoir 323 on the disposable cartridge to introduce the cells into the sample flow channel 309. The cell sample reservoir 323 is typically conical in shape, tapering towards the inlet port. In the preferred embodiment, the inlet reservoir contains a polypropylene insert to minimize cell adhesion and consequently maximize cell yield. Microfluidic channels 305, 307 on the chip fluidically connect outlets in reservoirs 321, 324 to the sample flow channel 309. Lateral flow channels 305a,b are configured to add the PCR mix to the sample flow channel 309 and then lateral flow channel 307 introduces the oil into the sample flow channel 309 to encapsulate the sample cells within the oil. The cartridge 320 is positioned within the instrument 300 such that a light source such as 488nm laser 303 and a fluorescence detector 312 are positioned adjacent the sample flow channel 309. The cartridge is preferably manufactured from optically clear acrylic plastic. Optical windows further allow visible interrogation of selected points in the microfluidic network and enable projection of the excitation sources and optical detectors through the cartridge and into the microfluidic chip. Other optically clear plastics or suitable materials may be substituted for acrylic if appropriate. The microfluidic channels are likewise produced in optically transparent substrates to enable projection of cell detection optics into the sample flow channel 309. This substrate is typically, but not limited to, glass, quartz, plastics, e.g., polymethylmethacrylate (PMMA), etc., and other castable or workable polymers (e.g. polydimethylsiloxane, PDMS or SU8).

Light from the 488nm laser 303 is projected through the cartridge 320 into the sample flow channel 309 just upstream of the encapsulation region to interrogate the cells. The 488nm laser 303 with a selected phenotypic characteristic of the sample cells. The fluorescence detector 312 measures the fluorescence to measure the phenotypic information for the cells. An encapsulation medium, such as oil, is then introduced into the sample flow cell 309 under conditions suitable to encapsulate single cells into individual nanoliter microvessels. The microvessel are then sorted based on one or more measured phenotypic characteristics of their encapsulated cell(s) though the sample flow channel 309 for further genotyping or into a waste flow channel 330 for transportation to a waste reservoir 334. As the microvessels are flowed through the sample flow channel 309, an index decoding laser 308 excites the index beads previously associated with the cells in a pseudorandom sequence. A decoding sensor 306 detects, images and stores the sequence of index beads attached to the cells in the order they are flowed through the sample flow channel 309 to create an index of the microvessels for later correlation with images of the genotypic measurements. Once the microvessels have been encoded, they are loaded into a serpentine microfluidic channel on the microfluidic chip for PCR amplification. A thermal module 302 on the instrument is positioned adjacent the preloaded microfluidic channel cycle the microvessels in the microfluidic chip through the temperature zones necessary to achieve PCR amplification. The thermal module 302 comprises a thermal control element and a standard thermal cycler using a heat block or Peltier device, or it may be accomplished with alternative technologies such as an one or more integrated heating wires, an oven, hot and cold air, flowing a heated liquid with good thermal conductivity, transferring the device between instrument components held at different temperatures or any other suitable heating elements known in the art. In some embodiments, multiple heating elements can be used to create spatial thermal zones which the chip is physically passed using a motorized element. Alternatively, a single heating element such as a cold/hot air heater can be used to alternately heat and cool the microfluidic channel to cycle it through the temperature profile for PCR amplification. The thermal control element controls the temperature and cycle the serpentine channel through the PCR temperature profile multiple times for the desired number of PCR cycles.

The microvessels are analyzed after each PCR cycle to determine the quantity of amplified product. As discussed above, the PCR mix includes probes that fluoresce at a level proportional to the quantity of amplified product. The probes may be excited by a light source, such as fixed and scanning lasers, UV lamps, light emitting diodes, at a specific time or temperature during each PCR cycle. The fluorescent signal is measured by a PCR image sensor 304 positioned adjacent to the microfluidic chip such as photomultiplier tube, a CCD camera, photodiodes or photodiode arrays, or other optical detector. The image sensor 304 measures the intensity of the fluorescence to measure the quantity of amplified product in the microreactors 208 and measure the genotype of the cells in each microvessel. The index decoding laser 308 also excites the index beads associated with each microvessel and the encoding signal is imaged by decoding sensor 306. The encoding signal and the genotype data for each microvessel are then sent to a processor for indexing and correlation of the phenotype measurement with the genotype data from the individual microvessels 208. In some embodiments, the microvessels are imaged and tracked cycle-by-cycle, for example using the drop size and the position in each image. In alternative embodiments, the microvessels are imaged and the encoding signals are read after the desired number of PCR cycles has been completed.

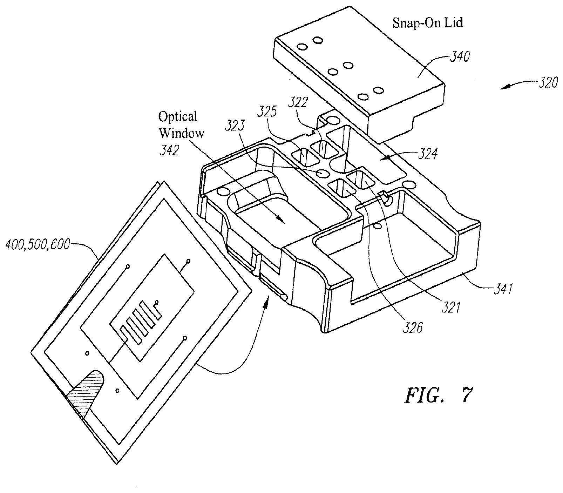

Fig. 7 illustrates an embodiment of a disposable sample loading cartridge for use with a microfluidic capillary tube or microfluidic chip for performing single cell analysis and correlation of phenotypic and genotypic information. The cartridge has six built-in reservoirs 321-326 that each have outlets configured to separately provide interface connections to microfluidic channels on an attached chip. The reservoir volumes 321-326 are sealed with the snap-on lid 340 that has drilled ports for connection between the pneumatic controllers and the individual reservoirs 321-326. The ports allow pneumatic pressure to be applied to the reservoirs to drive fluids and cells through the microfluidic network of an attached the microfluidic chip by separately pressurize the reservoirs 321-326. In alternative embodiments, the fluids could be driven by syringe pump, peristaltic pump or other means of movement. In the illustrated embodiment, reservoir 323 is configured with hold an sample having a volume of between about 5 to 50µL; reservoir 324 is configured to hold an encapsulation media, such as oil, having a volume of between about 50 - 1500 µL; and reservoir 321 is configured to hold a PCR mix. In some embodiments, the additional reservoirs 322 may be configured to hold an encoding media, such as fluorescent bead or dye. The reservoirs 321, 322, 323 and 324 each contain ports configured to be fluidically connected to inlets on the microfluidic network of an attached chip for loading the sample, PCR mix and optionally the encoding media and encapsulating the cells in the encapsulation media. Reservoirs 325 and 326 can be used as waste reservoir form embodiments wherein the cells are sorted prior to encapsulation. Alternatively, one or more of reservoirs 325 and 326 can be fluidically connected to a plurality of venting vias on an attached PCR chip to allow for thermal expansion and contraction of a sample stream within a microfluidic channel on the chip while preventing contamination of the sample stream from the outside environment. The lid 340 contains a silicone gasket to aid in sealing against the cartridge body 341. It also incorporates a 0.1 µm polypropylene filter to create a gas permeable, liquid tight interface between the cartridge volumes and the external environment. Other embodiments of disposable cartridges are described in further detail in co-pending Patent Application Serial No. 11/781,848, entitled "Cell Sorting Systems and Methods" (published WO2008130871).

As discussed above, the devices and methods for performing the phenotype-genotype correlation are scalable for samples numbering in the hundreds of cells to thousands of cells to the tens and hundreds of thousands of cells. The instrument platform 300 and the disposable sample loading cartridge 320 can be used with several different capillary tubes or microfluidic network chips configured to process samples of up to a hundred cells, alternatively up to a thousand cells, alternatively up to ten thousand cells, alternatively up to one hundred thousand cells.

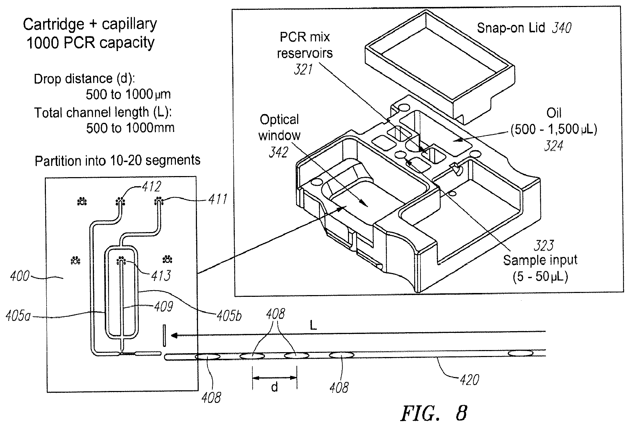

Fig. 8 illustrates an embodiment of a microfluidic loading chip 400 and capillary tube 420 for use with the disposable cartridge 320. The microfluidic chip 410 is configured to be attached to the optical window region of the cartridge 320 for example by bonding with UV adhesive. Inlet ports 411, 412 and 413 are positioned on the microfluidic chip to interface with the PCR mix reservoir 321, encapsulation media reservoir 324, and sample input reservoir 323 when the chip is attached to the cartridge 320. Sample inlet port 413 is fluidically connected to sample flow channel 409 so that in use the sample cells contained in sample reservoir 323 will be transported into sample flow channel 409. PCR mix reservoir 411 is fluidically connected to PCR flow channels 405a,b which intersect sample flow channel 409 at a T-junction to introduce the PCR mix into the stream of sample cells flowing through sample flow channel 409. In some embodiments, the flow conditions of the PCR mix are controlled such that introduction of the PCR mix also organizes the sample flow into a single file stream of cells. Alternatively, the diameter of the sample flow cell 409 can be configured to organize the sample into a single file stream of cells when the sample is introduced at the sample cell input 413. Encapsulation media inlet 412 is fluidically connected to encapsulation flow channel 407 which intersects sample flow channel 409 at an L-junction downstream of the PCR mix intersection. The encapsulation media, such as oil, flows into the stream of cells and PCR mix at the 'L" junction between the sample flow channel 409 and the encapsulation flow channel 407 under flow conditions suitable to pinch off droplets of cells and PCR mix into a stream of nanoliter microvessels preferably containing a single cell surrounded by the oil encapsulation media. The flow conditions in the encapsulation flow channel 407 are controlled to ensure that zero or one cell per microvessel are preferably encapsulated. For example, microfluidic channels compatible with flow cytometry typically have cross sections of 50 - 100 µm by 150 - 300 µm and Teflon capillary tubing is available with diameters as small as 400 µm, so the nanoliter microvessel 408 would have diameters in the range of 30 - 400 µm. The setting and control of the flow conditions in the microfluidic channel network can be achieved by direct drive pumping, pneumatic pumping, electro-kinetics, capillary action, gravity, or other means to generate fluidic flow.

The stream of microvessels 408 is then loaded into a microfluidic capillary tube 420 for amplification of genetic material in the microvessels and measurement of the gene expression. As discussed above, the flow conditions in the sample flow channel 409 and the encapsulation flow channel 307 can be further controlled to vary the size of the nanoliter microvessels and/or the spacing between the nanoliter microvessels as discussed above to provide a unique sequence of microvessels for encoding and indexing the relative position the microvessels. In the illustrated embodiment, the distance (d) between microvessels in the capillary tube is between about 500 to 1000µm and the total length (L) of the microfluidic capillary tube 420 is between about 500 to 1000mm to provide the capacity for about 1000 microvessels. In alternative embodiments, the drop spacing and or the total length of the microfluidic capillary tube can be adjusted to accommodate a larger or smaller sample. In use, the capillary tube is formed into a serpentine arrangement comprising a plurality of adjacent parallel segments connected by couplings on each end. For example, in some embodiments, the capillary tube is partitioned into between 10-20 parallel segments. The couplings are cut off leaving a plurality of adjacent parallel segments each approximately 40-50mm in length. The capillary tube is partitioned into the plurality of segments prior to the amplification process to minimize the ripple effect of thermal expansion during the PCR amplification cycle on the position of the microvessels within the capillary tube and thereby improve the ability to track the location of the individual microvessels so that the measurements of the amplified product can be correlated to prior phenotype measurements for each individual microvessel.

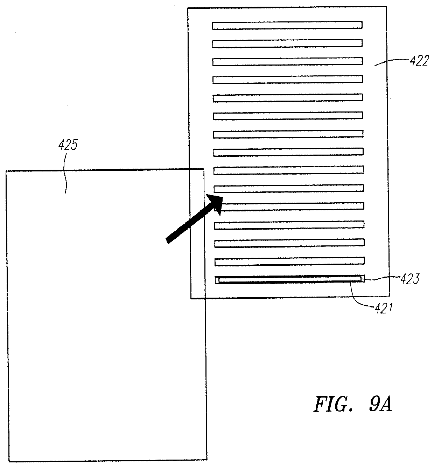

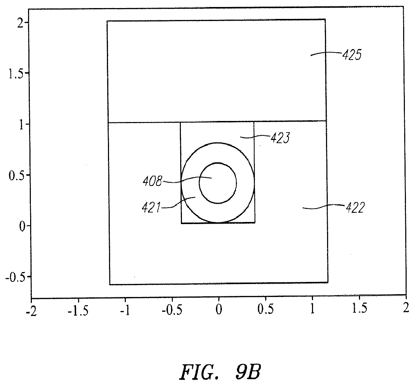

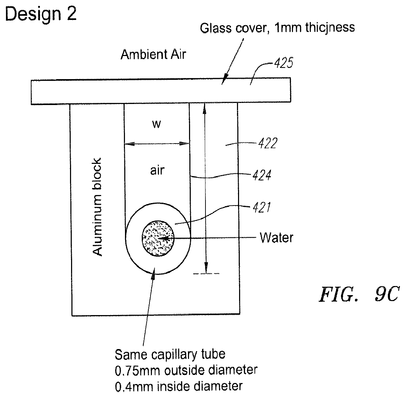

Figs 9A-C illustrate a thermal control module for use with the capillary based PCR system described above. Once the capillary tube 420 has been loaded with microvessels and partitioned into a plurality of segments 421, the segments 421 are placed into an aluminum block 422 having a plurality of rectangular grooves 423, or capillary tube holders. The rectangular grooves are approximately 1mm deep, alternatively 2mm deep, alternatively 3mm deep, alternatively 4mm deep, alternatively 5mm deep. In one embodiment, as shown in FIG. 9B, the rectangular grooves 423 have a width slightly narrower than the cross-sectional diameter of the capillary tube such that there is thermal contact between the bottom and sidewalls of the groove and the capillary tube, however in some embodiments, the rectangular grooves may be have a width slightly larger than the diameter of the capillary tubes as long as the capillary tube is in close proximity to the bottom and side walls of the aluminum block. In an alternative embodiment, as shown in FIG. 9C, the bottom side capillary tube holders 424 have been shaped to correspond to the diameter of the capillary tube segments such that there is more thermal contact between the aluminum block 422 and the capillary segments 421. In both the above described embodiments, the side walls of the rectangular grooves have a width greater than or equal to the diameter of the capillary tubes. In some embodiments, a glass cover 425 having a thickness of about 1mm can be placed over the top of the aluminum block to prevent conduction to the ambient air and block thermal radiation. Alternatively, a deeper groove can be used without a glass cover. In an alternative embodiment, the side walls of the rectangular grooves can be made thinner than the diameter of the capillary tubes to advantageously reduce the spacing between rectangular grooves and thereby increase the density of the capillary tubes in the heating block. In such an embodiment, a glass cover can be used over the rectangular grooves having a height equal to the capillary diameter to maintain good thermal conduction with thinner side walls, or alternatively, the height of the rectangular grooves can be made at least 1.5 times the diameter of the capillary tubes. For example, in one embodiment, the sidewalls can have a thickness of between about 0.1 to 0.2mm as long as the depth of the grooves is at least 1.5 times the diameter of the capillary tubes. Once the aluminum block 422 has been loaded with the plurality of capillary tube segments 421, the temperature of the aluminum block can be ramped from 60°C to 95°C at 1°C/S to cycle the capillary tube segments 421 through the temperature profile for PCR amplification. Any suitable heating element discussed above can be used to cycle the temperature through the desired number of PCR cycles.

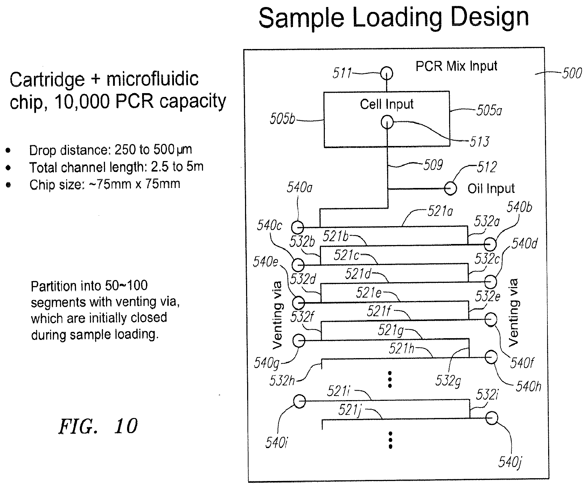

Fig. 10 illustrates an embodiment of a microfluidic chip 500 for performing single cell phenotype and genotype analysis and correlation on a larger sample. The illustrated microfluidic chip 500 is approximately 75mmx 75mm and has a capacity of up to a 10,000 microvessels. The microfluidic chip is preferably an optically transparent substrates to enable projection of the cell detection optics into the microchannels. This substrate is typically, but not limited to, glass, quartz, plastics, e.g., polymethylmethacrylate (PMMA), etc., and other castable or workable polymers (e.g. polydimethylsiloxane, PDMS or SU8).

As discussed above, in use, the microfluidic chip 500 is attached to a disposable sample loading cartridge containing the sample, PCR mix and encapsulation media. The chip 500 has a cell inlet 513, PCR mix inlet 512 and oil inlet 511 configured connect to the cell reservoir, PCR mix reservoir and oil reservoir on the disposable cartridge when the chip is positioned on the optical window of the disposable cartridge. Cell inlet port 515 is fluidically connected to sample flow channel 509 so that in use the cells contained in sample reservoir of the disposable cartridge will be transported into sample flow channel 509. PCR mix inlet 411 is fluidically connected to PCR flow channels 505a,b which intersect sample flow channel 509 to introduce the PCR mix into the stream of cells flowing through sample flow channel 409. In some embodiments, the flow conditions of the PCR mix are controlled such that introduction of the PCR mix also focuses the sample flow into a single file stream of cells. Alternatively, the diameter of the sample flow cell 509 can be configured to focus the sample into a single file stream of cells when the cells are introduced at the cell input 513. Oil inlet 512 is fluidically connected to encapsulation flow channel 507 which intersects sample flow channel 409 at an L-junction downstream of the PCR mix intersection. The oil flow is injected into the stream of cells and PCR mix at the 'L" junction between the sample flow channel 409 and the encapsulation flow channel 407 under flow conditions suitable to pinch off droplets of cells and PCR mix into a stream of nanoliter microvessels preferably containing a single cell surrounded by the oil encapsulation media. In some embodiments, a sorting region may be provided to sort the sample prior to encapsulation in order to limit the number of encapsulated cells to a pre-selected subpopultion that can still be correlated back to those phenotype measurements. For example, sorting can be performed to reject red blood cells to focus only on nucleated cells. The nanoliter microvessels preferably have a cross sectional diameter larger than the sample cells and smaller than the cross sectional diameter of the flow channel. For example, the microvessels preferably have a cross-sectional diameter between 30 µm - 400 µm depending on the flow channel size.

As discussed above, the flow conditions in the encapsulation flow channel 507 are controlled to ensure that a majority of the microvessels preferably contain either one cell or zero cells, for example, in some embodiments at least 90% of the microvessels contain one or zero cells, alternatively at least 80% of the microvessels contain one or zero cells, alternatively at least 70% of the microvessels contain one or zero cells, alternatively at least 60% of the microvessels contain one or zero cells, In addition, in some embodiments, the flow conditions of the encapsulation flow channel 507 and/or the sample flow channel 509 can be further controlled to periodically vary the microvessel size and/or the spacing between microvessels to create an encoding signal for indexing and tracking the individual microvessels. The setting and control of the flow conditions in the microfluidic channel network can be achieved by direct drive pumping, pneumatic pumping, electro-kinetics, capillary action, gravity, or other means to generate fluidic flow.

The stream of microvessels are then loaded into a serpentine channel 520 fluidically connected to the sample flow channel 509 for amplification of a target sequence in the sample cells. The serpentine analysis channel 509 is partitioned into a plurality of parallel segments 521a-j with adjacent segments 521a-j connected by a plurality of turn segments 531a-i. The serpentine channel is preferably partitioned into between 50-100 parallel segments, each 50-100mm long depending upon the sample size and the desired spacing between microvessels. Venting vias 540a-j are fluidically connected to each end of each parallel segment 521a-j of the serpentine channel 520. The venting vias 540a-j are configured to accommodate the thermal expansion and contraction of the stream of microvessels in each segment 521a-j between temperature cycles in the amplification process. Partitioning the serpentine channel 520 into a plurality of parallel segments connected to venting vias isolates the movement of the microvessels due to thermal expansion to each small segment 521a-j, thereby eliminating the ripple effect of the thermal expansion along the entire serpentine channel 520. Thus, the movement of the microvessels within the serpentine channel 520 during temperature cycling can be greatly reduced, improving the ability to track individual microvessels in a large volume sample such as contained within the serpentine channel 520. Minimizing the movement of the microvessels during temperature cycling also minimizes the risk of contamination from the microvessels moving back and forth over space occupied by adjacent microvessels and reduces the likelihood of coalescence of adjacent microvessels.

In use, the venting vias 541a-j are sealed off during loading of the serpentine channel 520 with a high pressure seal to maintain positive pressure on the serpentine channel 520 and ensure loading of the microvessels in the serpentine channel 520. In some embodiments, the first, high pressure seal can comprise a mechanical membrane and one or more rubber gaskets to seal off each venting via 540a-j during sample loading. Alternatively, the venting vias can be covered with photoresist material that can be etched off after loading or a hydrophobic valve that can be overcome by the thermal expansion pressure. Once the serpentine channel 520 has been loaded, the first high-pressure seal can be disengaged or removed. A second seal is then used to isolate the venting vias 540a-j from the outside environment to prevent contamination of the microvessels. The second seal is preferably mechanically compliant to accommodate the thermal expansion and contraction of the microvessel stream in each segment 521a-j during the thermocycling. For example, in some embodiments, the second seal can comprise a thin film or flexible membrane affixed to the venting vias 540a-j. Alternatively, the venting vias 540a-j can be fluidically connected to one or more common venting reservoir(s) on the disposable cartridge which is isolated from the outside environment by a flexible membrane or a lid with a filter.

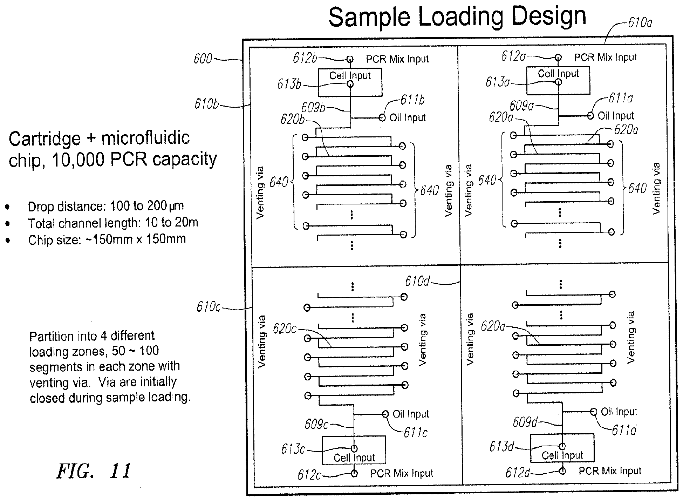

Fig. 11 illustrates an alternative embodiment of a microfluidic chip 600 for performing single cell phenotype and genotype analysis and correlation on a larger size sample, for example a sample comprising up to 100,000 microvessels. Chip 600 is partitioned into four separate loading and analysis zones 610a,b,c,d, each having a serpentine channel 620a-d configured to hold up to 25,000 microvessels with a spacing of about 100 to 200µm between microvessels. It is further envisioned that the chip could be divided into more or less loading zones depending upon the desired capacity of the chip. Each loading zone 610a-d has a cell inlet 613a-d, PCR mix inlet 612a-d and oil inlet 611a-d configured connect to the cell reservoir, PCR mix reservoir and oil reservoir on the disposable cartridge. Each loading zone 610a-d,on chip 600 preferably has the same dimensions as the 10,000PCR capacity chip previously described so that the relative locations of the cell input, PCR input and oil input are similar. In use, the PCR chip 600 can be connected to a motorized stage that will temporarily connect each loading zone 610a-d to the disposable cartridge for loading the sample and PCR mix in the chip 600, introducing the oil to encapsulate the sample and PCR mix in nanoliter microvessels and loading the microvessels into the serpentine analysis zone in the same manner as described above for a 10,000PCR microfluidic chip 500 having a single loading and analysis zone. Alternatively, the cartridge and the chip can be integrated into a single monolithic device.

For example, in some embodiments, the disposable cartridge can have shared reservoirs for the encapsulation media and the PCR mix that are either alternately connected to each chip for example using a motorized stage as described above, or multiplexed to each chip or loading zone. Alternatively, the disposable cartridge can have a plurality of independent oil and PCR mix reservoirs, each attached to a single loading zone. Likewise, in some embodiments, the cartridge can have a single sample reservoir that is multiplexed to each of the cell inputs using one or more valves and fluidic channels. Alternatively, in some embodiments, the cartridge may have multiple sample reservoirs, each independently connected to a single cell input and analysis zone. The cartridge is further configured to allow optical access to each loading zone for performing phenoptype analysis.

As previously described in reference to microfluidic chip 500, each loading and analysis zone 610a-d in the 100,000PCR chip 600 comprises a serpentine channel 620a-d fluidically connected to the sample flow channel 609a-d for amplification of a target sequence in the sample cells in each microvessel. The serpentine analysis channels 620 are partitioned into a plurality of parallel segments with connected by a plurality of turn segments. Each serpentine channel 620a-d is preferably partitioned into between 50-100 parallel segments between about 50-100mm long depending upon the sample size and the desired spacing between microvessels. As described above, venting vias 640 are fluidically connected to each end of each parallel segment of the serpentine channels 620a-d to seal off the serpentine channels 620a-d during the loading process and to allow for thermal expansion and contraction while isolating the serpentine channel for m the outside environment during the amplification process.

In an alternative embodiment, the phenotype-genotype analysis and correlation can be performed with a sample preloaded into a nanowell array chip. Fig. 12 illustrates the steps for analyzing and correlating phenotype-genotype data for genotype data derived from a sample pre-loaded into a nanowell array. In step 700, cells in sample input 70 are individually analyzed for a selected phenotypic characteristic. In some embodiments, the phenotype analysis can be performed in a microfluidic environment, or example by flow cytometry as discussed above, prior to isolation of the cells into the nanowells. Alternatively the phenotypic measurement can be performed after the cells have been isolated in the individual nanowells using scanning cytometry. As discussed above, in some embodiments multiple phenotype measurements can be made using for example, multiple fluorescence detectors, or a combination of light scattering measurements and fluorescence

In step 702, the cells may be sorted based on a parameter selected by the user, such as the measured phenotypic characteristic. The target cell can then be directed to a target flow channel for delivery to the nanowell array. Non-target cells can be directed to a waste flow channel attached to a waste reservoir.

In step 704, the target cells are sequentially placed in the nanowells of one or more arrays. The nanowells are preferably sized to contain one cell each. The nano-wells are preloaded with reagents necessary for gene expression measurements and fluorescent detecting molecules or probes that fluoresce at a level proportional to the quantity of the amplified product when excited. In some embodiments, the number of available wells preferrably exceeds the number of cells being measured to ensure limiting dilution. The individual wells are isolated from each other using a hydrophobic fluidic lid (e.g., oil). The phenotype information for the cells in each nanowell can be indexed and recorded based on the exact location of each cell in the array.

In step 706, the genotype of the individual cells is measured. The cells are lysed by heat, laser, ultrasound, or chemical lysing or any other suitable technique known in the art. The array is thermally coupled to a block heater and the nanowells are cycled through one or more temperatures necessary to amplify the gene products via isothermal amplification or a polymerase chain reaction (PCR). The array is subjected to the desired number of amplification cycles and the amplified gene product is measured.

In step 708, the genotype measurement is decoded. The fluorescent detecting molecules or probe are excited using a light source, such as fixed and scanning lasers, UV lamps, light emitting diodes, and an optical detector, such as CCD imaging, Photomultiplier tubes, photodiodes or photodiode arrays, images the array to measure the intensity of the fluorescent signal from each nanowell and detect the quantity of amplified product. In some embodiments, the optical detector, such as a CCD camera, images the entire array. Alternatively, each nanowell can be sequentially interrogated by scanning the excitation source or by a scanning detector such as a fiber optic couple to a photomultiplier tube). The images are sent to a processor for image processing and correlation to the phenotype measurements previously recorded for each nanowell to provide correlated phenotype and genotype data 74 for each cell.

As shown in Figs, 13A-B, in some embodiments the phenotype analysis of the cells can be performed sequentially in a microfluidic environment and then the cells can be loaded in a nanowell array for amplification and genotype analysis. Here, in step 700, the phenotype analysis is performed by introducing cells 808 into a microfluidic flow channel 709. As discussed above, the flow channel can configured to focus the cells into a stream of single cells for phenotypic analysis, for example by decreasing the cross-sectional diameter of the flow channel 709. The cells 808 are sequentially interrogated at analysis region 705 to measure one or more phenotypic characteristics of the cells. In some embodiments, the cells are sorted into target cells and non-target cells based on the measured phenotypic characteristic or any other parameter selected by the user. The presence of a target cell with the desired characteristic can be detected in the fluid stream by fluorescence, forward scattering or any suitable imaging or detection modality. The target cell can then be directed to target flow channel 711, using, dielectrophoresis, a pneumatic switch or a bi-directional fluid or optical switch described in co-pending Patent Application Serial No. 11/781,848, entitled "Cell Sorting Systems and Methods" (published WO2008130871), for delivery to the individual nanowells 801a-f on the nanowell array chip 800. Non-target cells are directed to waste flow channel 710 attached to a waste reservoir.

In step 704, the target flow channel 711 is fluidically connected to a microfluidic channel 803 on the nanowell array chip 800 for delivering the stream of target cells to the individual nanowells 801a-f.. The target cells 808 are sequentially deposited in individual nanowells 801a-f. Each nanwell location 801a-f has been preloaded with the necessary PCR reagents and fluorescent detectors or markers that fluoresce at a level proportional to the quantity of amplified product The location each cell in the nanowell array creates an index which can later be used to correlate the phenotype measurement for each cell with the genotype measurement based on that location in the array. Each nanowell 801a-f preferably has a volume of a few nanoliters for holding a single cell and the reagents necessary for amplification of a target DNA sequence. For example, in one embodiment, the wells are 100 µm x 100 µm squares with a depth of 70 µm. The nanowells 801a-f can be microfabricated using a variety of materials, including but not limited to, glass, quartz, plastics, e.g., polymethylmethacrylate (PMMA), etc., and other castable or workable polymers (e.g. polydimethylsiloxane, PDMS or SU8). The depth of the microfluidic channels 803 connecting the nanowells 801a-f is typically in, but not limited to, the range 10 µm to 100 µm. The width of the microfluidic channels is typically, but not limited to, 1 to 5 times the depth. Once the cells have been loaded into the individual nanowells 801a-f, oil or any other suitable encapsulation media is flowed through the microfluidic channel 803 to isolate the individual cells along with the PCR reagents in each well.

Next in step 706, the isolated cells are lysed and cycled through a temperature profile needed to achieve a polymerase chain reaction. For example as shown here, the array 800 is cycled through a first temperature around 96°C, a second temperature around 60°C and a third temperature around 72°C. In some embodiments, the temperature of the nanowell array can be adjusted to produce suitable temperatures for PCR by using one or more heating elements know in the art such as a heating block, integrated heating wires, Peltier heaters, or by circulating hot/cold fluid or hot/cold air. The desired number of PCR cycles are performed and the amplified product is measured. The flouroprobes or markers in each nanwell are excited by a light source, such as fixed and scanning lasers, UV lamps, light emitting diodes, and an optical detector 815, such as CCD imaging, Photomultiplier tubess, photodiodes or photodiode arrays, images the nanowells to measure the intensity of the fluorescent signal. In an alternative embodiment, UV light may be used to measure the absorption of the nucleic acid product. The measurements of the genotype can then be indexed according to their location on the array. Thus, the phenotype and genotype measurements for each individual cell can then be correlated based on the location in the nanowell array.

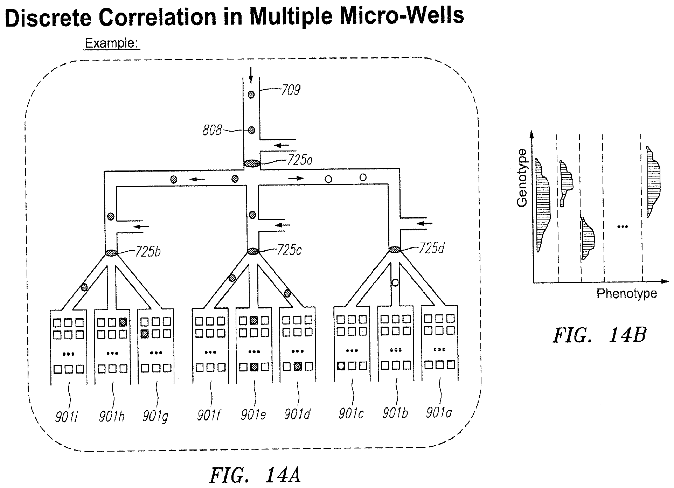

In an alternative embodiment shown in Fig. 14, the stream of cells 808 in flow channel 709 is sorted into multiple target arrays 901a-i. In the case of multiple target arrays, a network of sorting switches may be used to sort the stream of cells multiple time according to several measured phenotypic characteristics. For example, as shown here. four sorting switches 725a-d are used sorts cells three ways at each sort junction. The sorting network shown enables separation of cells into nine different arrays 901a-i based on the phenotype measured in advance of the sorting. While individual cells may not be correlated back to their phenotype, the cell-by-cell statistical distribution of each array's gene expression may be determined, and the statistical values may be correlated to up to nine phenotype clusters selected by the user, as shown in Fig. 14B.

As shown in Figs, 15A-B, in some embodiments the phenotype of each cell is measured by scanning cytometry after the cells have been deposited and isolated in the individual nanowells 801a-f. Here, the cells are labeled for phenotype analysis, for example using antibodies conjugated to fluorescent molecules (e.g., fluorescein isothiocynate a.k.a. FITC), nuclear stains, intracellular dyes or cell directed synthesis of fluorescent proteins (e.g., green fluorescent protein a.k.a. GFP)/ The cells are then deposited in the nanowells 801a-f with the PCR reagents needed for amplification of a target sequence and fluorescent probes or markers for detecting the quantity of the amplified target sequence and isolated. The nanowells 801a-f may be square and flat bottomed, or preferably, tapered to a small flat bottom so that cells are automatically centered at the bottom of the well. This reduces the number of optical scans necessary to measure the phenotype of the cells. A single cell is placed in each nanowell 801a-f. A light source 840, such as fixed and scanning lasers, UV lamps, light emitting diodes, is used to excite the fluorescent labels on the cells in the nanowell array 800 and each nanowell in the array 800 is sequentially interrogated with fluorescence detector 812 to measure one or more phenotypic characteristic of the cells. The location of each cell in the array and the phenotype measurement(s) are recorded so that the subsequent single cell genotypic measurement may be easily correlated back to the phenotype measurement(s). The isolated cells are lysed and cycled through a PCR temperature profile multiple times to amplify the genetic material, as previously described. The laser 840 is used to exited the fluorescent markers or probes in each nanowell and fluorescence detector 812 measures the intensity of the fluorescent signal to determine the quantity of amplified genetic material after each PCR cycle. This genotypic measurement is recorded for each location in the array and sent to a processor for correlating with the previously recorded phenotypic measurement for each nanowell location to correlate the phenotype and genotype measurements for each individual cell. In effect, the encoding and decoding are enabled by the coordinate system imposed by the array of wells.

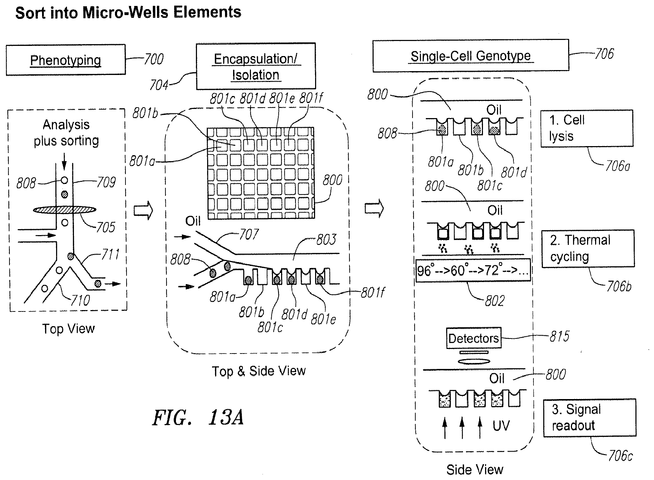

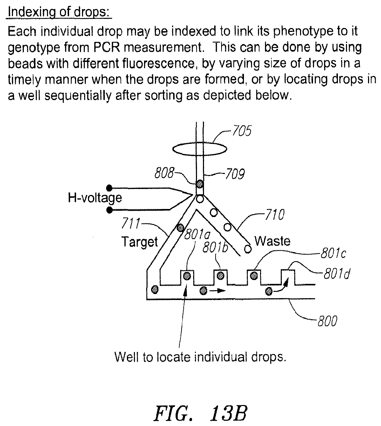

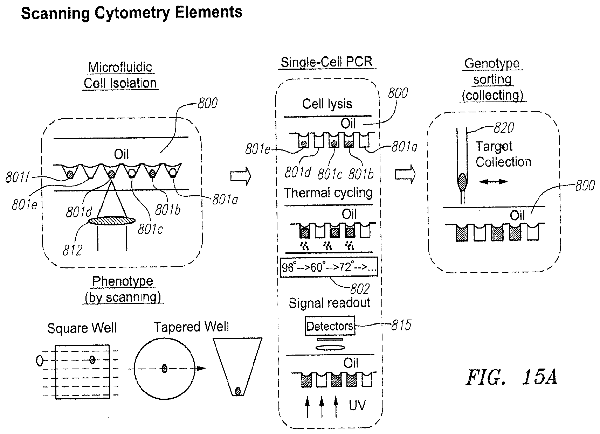

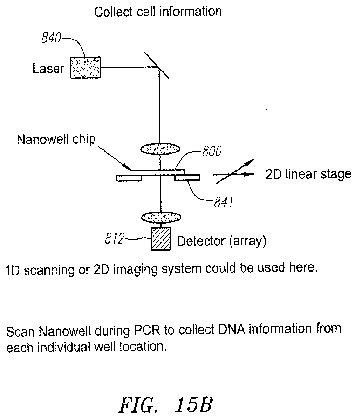

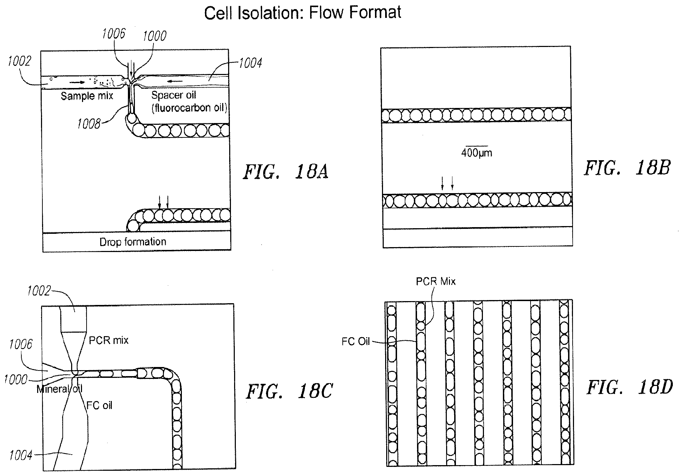

In some embodiments, as shown in Figs 15A and 18, it may be desired to recover genetic material from a selected portion of the cells amplified and measured in the nanowell array, based on the phenotype and genotype measurement of the cells. The cells can be interrogated for one or more phenotype measurements as shown in Figs 13 and 15 prior to or after being deposited in an array of nanowells or if the cells are being collected based solely on genotype information they may be deposited directly into a nanowell array 800. As discussed above, the cells are isolated, lysed, and the array 800 is thermally cycled through one or more temperatures to amplify the gene expression signature. The amplified genetic material is measured with optical detector 815 and correlated to the phenotype information for each nanowell location. The genetic material may then be harvested from the nanowells of interested based on the correlated phenotype-genotype information by using a robotic micro-pipet 820 to extract material from the individually addressable wells of interest.

An additional method of use of the nanowell embodiment shown in Figs. 13 and 15 is for genotype analysis only. Cells may be isolated, lysed, thermally cycled and measured for genotypic information as previously described in Figs. 13 and 15 to obtain parallel single cell genotypic data on tens of thousands to hundreds of thousands of cells. Because of the small typically nanoliter, volumes, the cost per reaction per cell would be comparable to the cost per reaction of the same number of cells in bulk.

Figs. 18A-18B show microphotographs of cell isolation in various flow formats. Specifically, microphotographs Figs. 18A and Fig. 18B show a device formed in plastic, and Figs. 18C and 18D show a device formed in PDMS. In Figs. 18A, an intersection 1000 of a sample mix solution in put 1002, a spacer material input 1004 (e.g., containing spacer oil, such as fluorocarbon oil), and solution input 1006, result at output 1008 of the sample mix contained within the solution separated by the spacer materials. Fig. 18B shows the dimension of the microphotographs with the bar marked 400 µm. Fig. 18C shows a similar structure having the same general components as Fig. 18, and have been numbered in a corresponding manner.

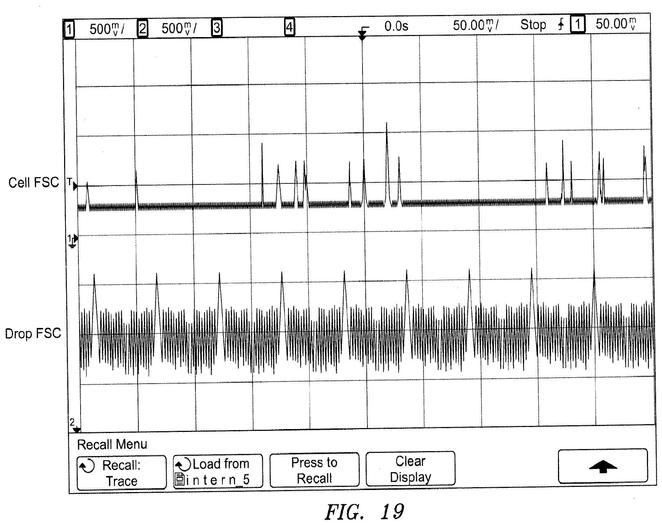

Fig. 19 shows an oscilloscope trace of cell forward scatter and drop forward scatter, as labeled. The y-axis depicts intensity and the x-axis depicts time. As can be seen from the drop forward scatter, (FSC), the drops have fairly regular periodicity and indicates the boundary between one drop and the next. In contrast, the number of peaks in cell forward scatter (FSC) results indicate the number of cells in each drop.

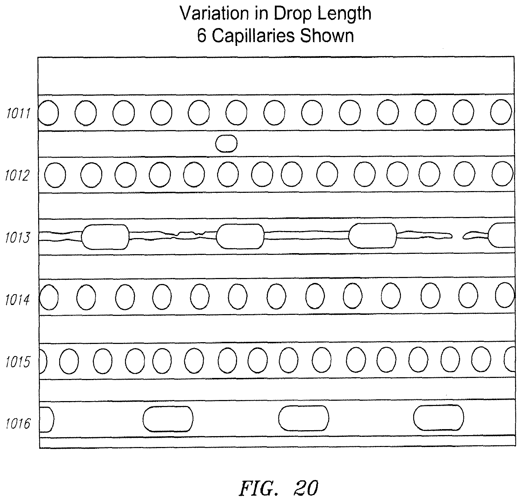

Fig. 20 shows a microphotograph of six capillaries labeled 1011 through 1016, sequentially from top to bottom in the photograph. Encoding of the materials is effected through variations in the drop length. For example, comparing the drop length in capillary 1013 to the those in adjacent capillary 1012 shows a significant variation in the drop length.

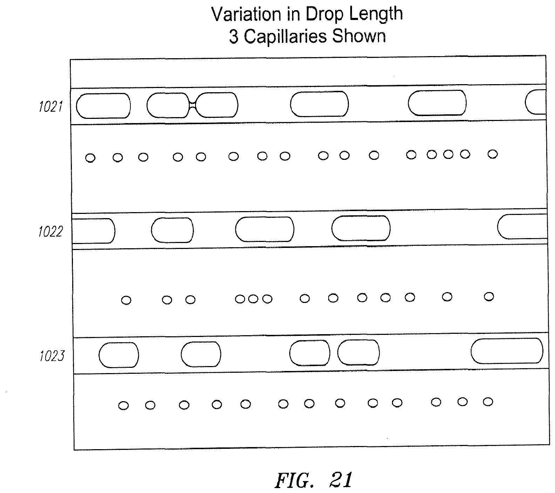

Fig. 21 is a microphotograph of yet further encoding patterns effecting by varying the drop length. Capillaries 1021, 1022 and 1023 are numbered from the top to the bottom of the microphotograph. Both the length and the position can form varying sequences, appearing in a somewhat "Morse code" pattern.

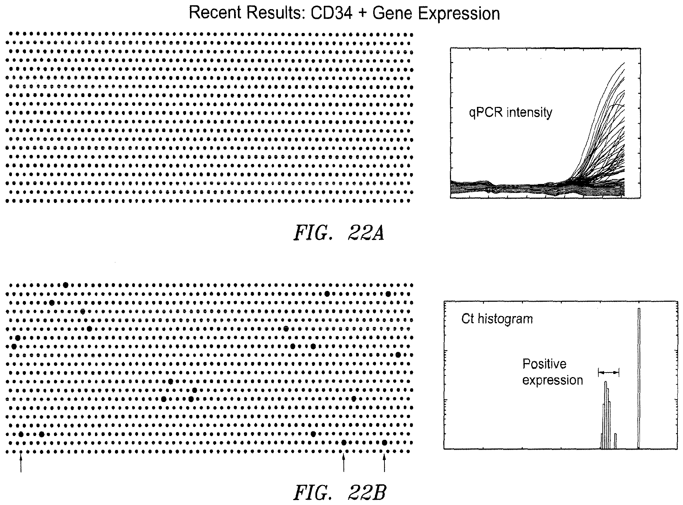

Figs. 22A and 22B show actual test results of gene expression. Fig. 22A shows 20 capillaries in parallel, each populated with multiple individual reaction volumes. Fig. 22A shows the results of the phenotype CD34. Fig. 22B shows the results after qPCR. The bright reaction drops represent positive gene expression. Certain of those drops are labeled with the arrows added to the microphotograph. Generally, there were one to two cells per drop. Approximately 5% of the cells were KG1A, which is CD34 positive. Approximately 95% of the cells were Jurkat cells, which are CD34 negative. The graph labeled qPCR intensity shows the quantitated PCR intensity as a function of the number of cycles. The x-axis beings at the left with 0 cycles and concludes at the right hand side at approximately 46 cycles. The CT histograph reflects the amount of expression of CD34 on a cell by cell basis.

## Claims

1. A method of correlating phenotypic and genotypic information on a cell by cell basis comprising:
providing a first solution containing a plurality of cells to which is added at least one reagent for amplifying a target nucleic acid sequence and a second solution that is immiscible with the first solution;
sequentially analyzing the phenotype of each cell in the first solution;
combining the first solution and second solution such that a stream comprising a plurality of nanoliter microvessels are formed, wherein a majority of the nanoliter microvessels encapsulate a single cell or remain empty of cells;
encoding the stream of nanoliter microvessels with a reference signal;
subjecting the nanoliter microvessels to thermal conditions suitable to amplify the target nucleic acid;
measuring the amplified nucleic acid sequence in each microvessel; and
decoding the reference signal to correlate the measurement of the amplified nucleic acid sequence from each microvessel with the phenotype of the cell in the microvessel.

2. The method of claim 1, wherein the method comprises sequentially analyzing the phenotype of each cell in the first solution;
(a) prior to addition of the at least one reagent to the first solution;
(b) following addition of the at least one reagent to the first solution but before the first and second solutions have been combined; or
(c) after the first and second solutions have been combined.

3. The method of claim 1, wherein amplifying the target nucleic acid comprises performing qPCR, realtime PCR, end-point PCR or isothermal amplification.

4. The method of claim 1, further comprising imaging the stream of nanoliter microvessels after the stream has been encoded with the reference signal to create an index.

5. The method of claim 1, wherein analyzing the phenotype comprises measuring a fluorescent signal.

6. The method of claim 1, wherein analyzing the phenotype comprises performing multiple phenotypic measurements.

7. The method of claim 1, further comprising sorting the cells based on the phenotypic measurement into target cells and non-target cells wherein the non-target cells are diverted to a waste reservoir.

8. The method of claim 1, further comprising lysing the cells in the nanoliter microvessels.

9. The method of claim 1, wherein the amplified nucleic acid sequence is measured by real-time or quantitative PCR.

10. The method of claim 1, wherein measuring the amplified nucleic acid sequence comprises measuring the absorption of the genetic material.

11. The method of claim 1, wherein measuring the amplified nucleic acid sequence comprises measuring the absorption by a probe or dye which binds to DNA products or to by-products of DNA amplification.

12. The method of claim 1, further comprising sorting the stream of nanoliter microvessels based on the measurement of amplified nucleic acid sequence.

13. The method of claim 1, further comprising introducing said first solution and said second solution into a microfluidic network.

14. The method of claim 13, wherein said microfluidic network comprises:
a loading zone comprising at least first and second flow channels for combining said first and second solutions such that a stream comprising a plurality of nanoliter microvessels is formed,
an encoding region, and
an analysis zone comprising
a serpentine flow channel having a plurality of parallel partitions having first and second ends and being fluidically connected to each other, and
a plurality of venting vias located at the first and second ends of the plurality of partitions, and
a decoding region.

15. The method of claim 1, wherein the stream of nanoliter microvessels is sorted into an array of nanofluidic micro-wells such that each well contains a single microvessel and wherein the array of micro-wells is subjected to repetitive temperature cycling.

## Patentansprüche

1. Verfahren zur Korrelation phänotypischer und genotypischer Informationen auf einer Zelle zellbasiert, umfassend:
Bereitstellen einer ersten Lösung, enthaltend eine Vielzahl von Zellen, denen mindestens ein Reagenz zur Amplifizierung einer Ziel-Nukleinsäuresequenz zugesetzt wird, und einer zweiten Lösung, die mit der ersten Lösung messbar ist;
sequenzielles Analysieren des Phänotyps von jeder Zelle in der ersten Lösung;
Kombinieren der ersten Lösung und zweiten Lösung, derart dass ein Strom, umfassend eine Vielzahl von Nanoliter-Mikrogefäßen gebildet wird, wobei eine Mehrheit der Nanoliter-Mikrogefäße eine einzelne Zelle verkapselt oder von Zellen leer bleibt;
Kodieren des Stroms von Nanoliter-Mikrogefäßen mit einem Referenz Signal;
Aussetzen der Nanoliter-Mikrogefäße gegenüber Wärmebedingungen, die zur Amplifizierung der Ziel-Nukleinsäuren geeignet sind;
Messen der amplifizierten Nukleinsäuresequenz in jedem Mikrogefäß; und Dekodieren des Referenzsignals zur Korrelation der Messung der amplifizierten Nukleinsäuresequenz aus jedem Mikrogefäß mit dem Phänotyp der Zellen in dem Mikrogefäß.

2. Verfahren nach Anspruch 1, wobei das Verfahren das sequenzielle Analysieren des Phänotyps von jeder Zelle in der ersten Lösung
(a) vor der Zugabe des mindestens einen Reagenz zu der ersten Lösung;
(b) nach der Zugabe des mindestens einen Reagenz zu der ersten Lösung, jedoch vor der Kombination der ersten und zweiten Lösung; oder
(c) nach der Kombination der ersten und zweiten Lösung umfasst.

3. Verfahren nach Anspruch 1, wobei das Amplifizieren der Ziel-Nukleinsäure die Durchführung von qPCR, Echtzeit-qPCR, Endpunkt-qPCR oder isothermer Amplifikation umfasst.

4. Verfahren nach Anspruch 1, weiterhin umfassend das Abbilden des Stroms von Nanoliter-Mikrogefäß nachdem der Strom mit dem Referenzsignal codiert worden ist, um einen Index zu erzeugen.

5. Verfahren nach Anspruch 1, wobei das Analysieren des Phänotyps das Messen eines Fluoreszenzsignals umfasst.

6. Verfahren nach Anspruch 1, wobei das Analysieren des Phänotyps die Durchführung mehrerer phänotypischer Messungen umfasst.

7. Verfahren nach Anspruch 1, weiterhin umfassend das Sortieren der Zellen auf Basis der Phänotyp-Messung in Zielzellen und Nicht-Zielzellen, wobei die Nicht-Zielzellen zu einem Abfallbehälter umgeleitet werden.

8. Verfahren nach Anspruch 1, weiterhin umfassend die Lyse der Zellen in den Nanoliter-Mikrogefäßen.

9. Verfahren nach Anspruch 1 wobei die amplifizierte Nukleinsäuresequenz durch Echtzeit- oder quantitative PCR gemessen wird.

10. Verfahren nach Anspruch 1, wobei das Messen der amplifizierten Nukleinsäuresequenz das Messen der Absorption des genetischen Materials umfasst.

11. Verfahren nach Anspruch 1, wobei das Messen der amplifizierten Nukleinsäuresequenz das Messen der Absorption durch eine Sonde oder einen Farbstoff umfasst, der an die DNA-Produkte oder an Nebenprodukte der DNA-Amplifikation bindet.

12. Verfahren nach Anspruch 1, weiterhin umfassend das Sortieren des Stroms von Nanoliter-Mikrogefäßen auf Basis der Messung amplifizierter Nukleinsäuresequenz.

13. Verfahren nach Anspruch 1, weiterhin umfassend das Einbringen der ersten Lösung und der zweiten Lösung in ein mikrofluides Netzwerk.

14. Verfahren nach Anspruch 13, wobei das mikrofluide Netzwerk umfasst:
eine Ladezone, umfassend mindestens erste und zweite Durchflusskanäle zum Kombinieren der ersten und zweiten Lösungen, derart dass ein Strom, der eine Vielzahl von Nanoliter-Mikrogefäßen umfasst, gebildet wird,
eine kodierende Region, und
eine Analysezone, umfassend
einen Serpentinendurchflusskanal mit einer Vielzahl von parallelen Unterteilungen mit ersten und zweiten Enden und miteinander fluidleitend verbunden, und
eine Vielzahl von Entlüftungsumleitungen, die an den ersten und zweiten Enden der Vielzahl von Unterteilungen angeordnet sind,
und
eine dekodierende Region.

15. Verfahren nach Anspruch 1, wobei der Strom von Nanoliter-Mikrogefäßen zu einer Reihe von nanofluiden Mikromulden sortiert wird, derart dass jede Mulde ein einzelnes Mikrogefäß enthält, und wobei die Reihe von Mikromulden wiederholtem zyklischem Temperaturwechseln unterzogen wird.

## Revendications

1. Procédé de corrélation d'informations phénotypiques et génotypiques cellule par cellule consistant à :
fournir une première solution contenant une pluralité de cellules à laquelle est ajouté au moins un réactif pour amplifier une séquence d'acide nucléique cible et une deuxième solution qui n'est pas miscible avec la première solution ;
analyser séquentiellement le phénotype de chaque cellule dans la première solution ;
combiner la première solution et la deuxième solution de sorte qu'un flux comprenant une pluralité de micro-récipients de l'ordre du nanolitre soit formé, où la majorité des micro-récipients de l'ordre du nanolitre encapsulent une seule cellule ou restent vides de cellules ;
coder le flux de micro-récipients de l'ordre du nanolitre avec un signal de référence ;
soumettre les micro-récipients de l'ordre du nanolitre à des conditions thermiques appropriées pour amplifier l'acide nucléique cible ;
mesurer la séquence d'acide nucléique amplifiée dans chaque micro-récipient ; et
décoder le signal de référence pour corréler la mesure de la séquence d'acide nucléique amplifiée provenant de chaque micro-récipient avec le phénotype de la cellule dans le micro-récipient.

2. Procédé de la revendication 1, le procédé consistant à analyser séquentiellement le phénotype de chaque cellule dans la première solution ;
(a) avant l'ajout de l'au moins un réactif à la première solution ;
(b) après l'ajout de l'au moins un réactif à la première solution mais avant que les première et deuxième solutions n'aient été combinées ; ou
(c) après que les première et deuxième solutions ont été combinées.

3. Procédé de la revendication 1, dans lequel l'amplification de l'acide nucléique cible consiste à réaliser une qPCR, une PCR en temps réel, une PCR en point final ou une amplification isotherme.

4. Procédé de la revendication 1, comprenant en outre l'imagerie du flux de micro-récipients de l'ordre du nanolitre après que le flux a été codé avec le signal de référence pour créer un indice.

5. Procédé de la revendication 1, dans lequel l'analyse du phénotype consiste à mesurer un signal fluorescent.

6. Procédé de la revendication 1, dans lequel l'analyse du phénotype consiste à réaliser de multiples mesures phénotypiques.

7. Procédé de la revendication 1, consiste en outre à les cellules sur la base de la mesure phénotypique en des cellules cibles et des cellules non cibles où les cellules non cibles sont détournées vers un réservoir à déchets.

8. Procédé de la revendication 1, consiste en outre à lyser les cellules dans les micro-récipients de l'ordre du nanolitre.

9. Procédé de la revendication 1, dans lequel la séquence d'acide nucléique amplifiée est mesurée par une PCR en temps réel ou quantitative.

10. Procédé de la revendication 1, dans lequel la mesure de la séquence d'acide nucléique amplifiée consiste à mesurer l'absorption du matériel génétique.

11. Procédé de la revendication 1, dans lequel la mesure de la séquence d'acide nucléique amplifiée consiste à mesurer l'absorption par une sonde ou un colorant qui se lie à des produits d'ADN ou à des sous-produits d'amplification d'ADN.

12. Procédé de la revendication 1, consistant en outre à trier le flux de micro-récipients de l'ordre du nanolitre sur la base de la mesure de la séquence d'acide nucléique amplifiée.

13. Procédé de la revendication 1, consistant en outre à introduire ladite première solution et ladite deuxième solution dans un réseau microfluidique.

14. Procédé de la revendication 13, dans lequel ledit réseau microfluidique comprend :
une zone de chargement comprenant au moins des premier et deuxième canaux d'écoulement pour combiner lesdites première et deuxième solutions de sorte qu'un flux comprenant une pluralité de micro-récipients de l'ordre du nanolitre soit formé,
une région de codage, et
une zone d'analyse comprenant :
un canal d'écoulement en serpentin ayant une pluralité de cloisons parallèles ayant des premières et deuxièmes extrémités et étant en communication fluidique les unes avec les autres, et
une pluralité de trous d'aération situés au niveau des premières et deuxièmes extrémités de la pluralité de cloisons,
et
une région de décodage.

15. Procédé de la revendication 1, dans lequel le flux de micro-récipients de l'ordre du nanolitre est trié en une matrice de micro-puits nanofluidiques de sorte que chaque puits contienne un seul micro-récipient et dans lequel la matrice de micro-puits est soumise à un cycle répétitif de température.
